(19) Europäisches Patentamt
European Patent Office
Office européen des brevets

(11) Veröffentlichungsnummer: **0 087 045**
**B1**

# (12) EUROPÄISCHE PATENTSCHRIFT

(45) Veröffentlichungstag der Patentschrift: **04.12.85**

(51) Int. Cl.[4]: **C 08 G 75/02**

(21) Anmeldenummer: **83101119.2**

(22) Anmeldetag: **07.02.83**

## (54) Verfahren zur Herstellung von Polyarylensulfiden mit erhöhter thermischer und chemischer Belastbarkeit und verbesserter Farbqualität.

(30) Priorität: **19.02.82 DE 3205995**

(43) Veröffentlichungstag der Anmeldung: **31.08.83 Patentblatt 83/35**

(45) Bekanntmachung des Hinweises auf die Patenterteilung: **04.12.85 Patentblatt 85/49**

(84) Benannte Vertragsstaaten: **BE DE FR GB IT**

(56) Entgegenhaltungen:
**PATENT ABSTRACTS OF JAPAN, unexamined applications, Sektion C, Band 4, No. 89, 25. Juni 1980, THE PATENT OFFICE JAPANESE GOVERNMENT, Seite 126 C 16**

(73) Patentinhaber: **BAYER AG, Konzernverwaltung RP Patentabteilung, D-5090 Leverkusen 1 Bayerwerk (DE)**

(72) Erfinder: **Ostlinning, Edgar, Dr., Rembrandtstrasse 37, D-4000 Düsseldorf (DE)**
Erfinder: **Idel, Karsten, Dr., Scheiblerstrasse 81, D-4150 Krefeld (DE)**
Erfinder: **Neuner, Otto, Dr., Heiligenstock 77, D-5060 Bergisch-Gladbach 2 (DE)**
Erfinder: **Bottenbruch, Ludwig, Dr., Woehlerstrasse 5, D-4150 Krefeld 1 (DE)**

EP 0 087 045 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Polyarylensulfide sind bekannt (vgl. US-PS 2 538 941 und 2 513 188). Sie können aus den entsprechenden Halogenaromaten und Alkali- oder Erdalkalisulfiden hergestellt werden. Man kann in Masse arbeiten nach dem in US-PS 3 354 129 beschriebenen Verfahren monomere und polymere Sulfide erhalten durch Umsetzung von mindestens einer cyclischen Verbindung, die eine Doppelbindung zwischen benachbarten Ringatomen enthält, und die wenigstens durch ein Halogenatom substituiert ist, mit einem Alkalisulfid in einem polaren Solvens wie Amid, Lactam oder Sulfon bei erhöhter Temperatur. Polyhalogenverbindungen können als Verzweiger eingesetzt werden.

In DE-AS 2 453 749 werden Carboxylate als Reaktionsbeschleuniger und neben Alkalisulfiden auch organische Thioverbindungen als Schwefelspender beansprucht.

Gemäß DE-OS 2 623 363 bzw. US-PS 4 038 261 werden als Katalysatoren für die Herstellung von Arylensulfidpolymeren Lithiumchlorid oder Lithiumcarboxylat eingesetzt. N-Methylpyrrolidon und Alkalihydroxide vervollständigen das Katalysatorsystem.

Gemäß US-PS 4 038 259 werden Alkalicarbonate in Kombination mit Alkalicarboxylaten und gemäß US-PS 4 038 263 Lithiumhalogenide als Katalysatoren für die Polyphenylensulfidherstellung eingesetzt.

Gemäß DE-OS 2 623 362 bzw. US-PS 4 038 262 werden Lithiumhalogenide oder Alkalicarboxylate als Katalysatoren für die Herstellung von Arylensulfidpolymeren verwendet. N-Methylpyrrolidon und Alkalihydroxide vervollständigen das Katalysatorsystem.

Gemäß DE-OS 2 623 333 bzw. US-PS 4 046 114 wird Lithiumacetat als Katalysator für die Herstellung von Arylensulfidpolymeren verwendet. N-Alkylpyrrolidone und gegebenenfalls als Basen Alkalihydroxide und/oder Alkalicarbonate vervollständigen das Katalysatorsystem.

In US-PS 4 038 260 werden Alkalimetallsulfonate und in US-PS 4 039 518 Lithiumcarbonat und Lithiumborat beansprucht.

In DE-OS 2 623 333 wird die üblicherweise vor der Umsetzung mit Dihalogenaromaten in dem polaren Lösungsmittel durchgeführte Entwässerung in zwei Stufen vorgenommen. Zuerst wird das Hydrat des Katalysators Lithiumacetat entwässert und in einem zweiten Schritt anschließend das Natriumsulfidhydrat.

Gemäß JP-PS 55-54330 wird lineares Polyphenylensulfid dadurch hergestellt, daß ein Lösungsmittelgemisch verwendet wird, das im wesentlichen 1,3-Dimethyl-2-imidazolidinon (N,N'-Dimethyl-ethylenharnstoff) verwendet (Anspruch 3 der JP-Patentpublikation). Als Lösungsmittelpartner dient vorzugsweise N-Methylpyrrolidon. Die Reaktionstemperaturen des Verfahrens liegen bei 220—225° C.

Bei alleiniger Verwendung von 1,3-Dimethyl-2-imidazolidinon ist die Ausbeute jedoch schlechter als bei alleiniger Verwendung von N-Methylpyrrolidon; ebenso ist die Intrinsic Viskosität des erhaltenen Polyphenylensulfids bei alleiniger Verwendung von 1,3-Dimethyl-2-imidazolidinon kleiner als bei alleiniger Verwendung von N-Methylpyrrolidon (siehe Beispiele und Kurven in obengenannter jap. Patentpublikation 55-54330).

Demgegenüber wurde nun gefunden, daß verzweigte Polyarylensulfide mit höherer chemischer und thermischer Belastbarkeit sowie verbesserter Farbqualität erhalten werden, wenn man in an sich bekannter Weise Di- mit Tri- und/oder Tetrahalogenbenzolen und Alkali- oder Erdalkalisulfide in einem vollständig am Stickstoff alkylierten cyclischen Harnstoff, vorzugsweise N,N'-Dimethylethylenharnstoff als Cosolvenz kondensiert.

Dabei war es um so überraschender, daß in N,N'-Dimethylethylenharnstoff nicht nur eine höhere Ausbeute erreicht wurde als in N-Methylpyrrolidon oder im Gemisch dieser beiden Lösungsmittel, sondern daß das Produkt außerdem eine wesentlich erhöhte thermische und chemische Belastbarkeit im Vergleich zu den Produkten gemäß JP-PS 55-54330 aufweist. Es war nicht zu erwarten, daß durch Veränderung der Verfahrensparameter und Zusatz von Verzweigern die Polyarylensulfidherstellung gerade in reinem N,N'-Dimethylethylenharnstoff gegenüber dem Lösungsmittelgemisch entscheidend verbessert werden.

Gegenstand der Erfindung ist somit ein Verfahren zur Herstellung von verzweigten Polyarylensulfiden aus

a) Dihalogenbenzolen, von denen 50 bis 100 Mol-% der Formel (I)

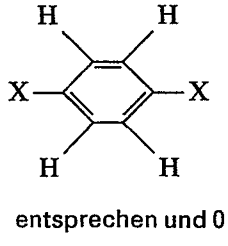

(I)

entsprechen und 0 bis 50 Mol-% der Formel (II)

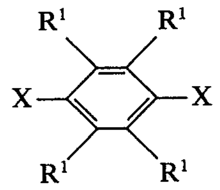

(II)

wobei

X Fluor, Chlor, Brom und Jod, vorzugsweise Chlor und Brom ist und

$R^1$ gleich oder verschieden ist und Wasserstoff, $C_1-C_{20}$-Alkyl, $C_5-C_{20}$-Cycloalkyl, $C_6-C_{24}$-Aryl, $C_7-C_{24}$-Alkaryl oder $C_7-C_{24}$-Aralkyl sein kann, und/oder zwei Reste $R^1$ zu einem aromatischen oder heterocyclischen Ring verknüpft sein können, und immer mindestens ein Rest $R^1$ verschieden von Wasserstoff ist, und

b) 0,2 bis 2,4 Mol-%, bevorzugt 0,4 bis 2,0 Mol-%, bezogen auf die Dihalogenbenzole, eines Tri- oder Tetrahalogenaromaten der Formel (III)

$ArX_n$ (III)

wobei

Ar ein aromatischer oder heterocyclischer Rest mit 6—24 C-Atomen ist,

X die gleiche Bedeutung wie in Formel (I) und (II) hat und

n 3 oder 4 ist, und

c) Alkalisulfiden, bevorzugt Natrium- oder Kaliumsulfid oder deren Mischung, bevorzugt in Form der Hydrate oder wäßriger Mischungen, gegebenenfalls zusammen mit Alkalihydroxiden, wobei das molare Verhältnis von (a+b) : c im Bereich von 0,85 : 1 bis 1,15 : 1, vorzugsweise 0,95 : 1 bis 1,05 : 1, liegt in

d) am Stickstoff vollständig alkylierten cyclischen Harnstoff, vorzugsweise N,N'-Dimethyl-ethylenharnstoff, wobei das molare Verhältnis von c) zu d) im Bereich von 1 : 2 bis 1 : 15 liegt, gegebenenfalls unter Mitverwendung von Katalysatoren unter üblichen Reaktionszeiten umsetzt,

dadurch gekennzeichnet, daß man eine Reaktionstemperatur von 250° C bis 290° C, vorzugsweise von 265° C bis 285° C, einhält und Drücke von 4 bar bis 50 bar, vorzugsweise von 4 bar bis 20 bar, anwendet.

Die Art und Menge der einzusetzenden Alkalisulfide entspricht dem Stande der Technik. Es sind z. B. Lithium-, Natrium-, Kalium- und Rubidiumsulfid geeignet, wobei Natrium- und Kaliumsulfid bevorzugt werden. Als gegebenenfalls zur Regenerierung der Alkalisulfide einzusetzende Alkalihydroxide seien LiOH, NaOH und KOH genannt. Es können in beiden Fällen auch Mischungen sowohl der Sulfide als auch der Hydroxide eingesetzt werden.

Die Alkalisulfide können in einem oder mehreren Schritten, beispielsweise durch Abdestillieren des Wassers aus der Reaktionslösung, entwässert werden. Die partielle Entwässerung sollte vor der Zugabe der p-Dihalogenverbindungen der Formeln (I) und (II) abgeschlossen werden.

Das Zusammengeben der Reaktanten kann im Prinzip in beliebiger Form erfolgen. Die p-Dihalogenaromaten der Formeln (I) und (II) und die Polyhalogenaromaten der Formel (III) können zusammen oder getrennt, kontinuierlich, in Portionen oder direkt auf einmal zu dem Alkalisulfid, dem Lösungsmittel oder einem Teil davon gegeben werden.

Es können aber auch das Alkalisulfid zusammen mit dem Lösungsmittel oder einem Teil davon zu den Verbindungen der Formeln (I) und (II) und den Polyhalogenaromaten (III) gegeben werden. Es können auch alle Reaktanten direkt zusammengegeben werden. Jede andere Kombination der Reaktanten ist ebenfalls möglich.

Beispiele für die erfindungsgemäß einzusetzenden p-Dihalogenaromaten der Formel (I) sind:

p-Difluorbenzol, p-Dichlorbenzol, p-Dibrombenzol, p-Dijodbenzol, 1-Fluor-4-chlorbenzol, 1-Fluor-4-brombenzol, 1-Chlor-4-brombenzol, 1-Chlor-4-jodbenzol und 1-Brom-4-jodbenzol.

Sie sind allein oder im Gemisch miteinander verwendbar.

Beispiele für die erfindungsgemäß einzusetzenden p-Dihalogenaromaten der Formel (II) sind:

2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol.

Sie sind allein oder im Gemisch miteinander einsetzbar.

Beispiele für die erfindungsgemäß einzusetzenden Tri- bzw. Tetrahalogenaromaten der Formel (III) sind:

1,2,3-Trichlorbenzol, 1,2,4-Trichlorbenzol, 1,2,4-Tribrombenzol, 1,2,4-Trijodbenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlor-triazin.

Di-, Tris- und Tetrahalogenaromaten können sowohl simultan als auch getrennt der Reaktionsphase zugesetzt werden.

Generell kann jeder am Sticktoff vollständig alkylierte, cyclische Harnstoff als Lösungsmittel verwendet werden, der eine ausreichende Löslichkeit der organischen oder anorganischen Reaktanten unter den Reaktionsbedingungen gewährleistet.

Im Sinne der Erfindung werden vorzugsweise cyclische Harnstoffe der Formel IV als Lösungsmittel verwendet,

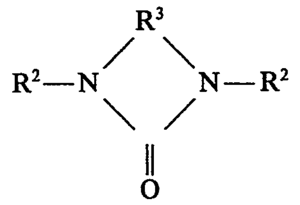

(IV)

in der

$R^2$ gleich oder verschieden sein kann und einen $C_1$- bis $C_4$-Alkylrest bedeutet, bevorzugt Methyl ist, und

$R^3$ ein Ethylen- oder Propylenrest, bevorzugt Ethylenrest ist, der auch substituiert sein kann.

Beispielsweise seien genannt N,N'-Dimethylethylenharnstoff und N,N'-Dimethylpropylenharnstoff.

Es können auch Mischungen der cyclischen Harnstoffe eingesetzt werden. Die Menge an erfindungsgemäß einzusetzendem cyclischen Harnstoff liegt vorzugsweise bei 2 bis 15 Mol pro Mol Alkalisulfid.

Geeignete Katalysatoren sind beispielsweise Lithiumacetat, Alkaliphosphat, Alkaliphosphonat und Alkalifluorid.

Die Reaktionszeit kann bis zu 10 Stunden betragen, liegt vorzugsweise zwischen 0,2 bis 5 Stunden. Eine stufenweise Steigerung der Reaktionstemperatur während dieser Zeit ist von Vorteil.

Die anzuwendenden Drücke werden im Autoklav im allgemeinen durch das Reaktionsgemisch aufgebaut, es kann jedoch auch ein Überdruck durch ein Inertgas erzeugt werden.

Die Aufarbeitung des Reaktionsgemisches und die Isolierung der Polyarylensulfide kann in mannigfaltiger Weise erfolgen.

Das Polyarylensulfid kann direkt aus der Reaktionslösung oder erst nach Zugabe, z. B. von Wasser und/oder verdünnten Säuren, nach üblicher Verfahrensweise abgetrennt werden, beispielsweise durch Filtration oder durch Zentrifugieren.

Nach der Filtration schließt sich im allgemeinen zur Entfernung von anorganischen Bestandteilen, die den Polymeren anhaften können, wie z. B. Reste Alkalisulfide und Alkalichloride, eine Wäsche mit Wasser an.

Eine Wäsche oder Extraktion mit anderen Waschflüssigkeiten, die auch zusätzlich oder nachträglich zu dieser Wäsche durchgeführt werden kann, ist natürlich auch möglich.

Das Polymere kann auch durch Abziehen des Lösungsmittels aus dem Reaktionsraum und eine anschließende Wäsche, wie oben beschrieben, gewonnen werden.

Die erfindungsgemäßen Polyarylensulfide können auch mit anderen Polymeren, wie Pigmenten und Füllstoffen, wie beispielsweise Graphit, Metallpulver, Glaspulver, Quarzmehl oder Glasfasern gemischt oder mit den für Polyarylensulfide üblichen Additiven, wie beispielsweise üblichen Stabilisatoren oder Entformungsmitteln, versetzt werden.

Die erfindungsgemäßen Polyarylensulfide besitzen im Vergleich zu den handelsüblichen Typen eine wesentlich erhöhte chemische und thermische Resistenz sowie eine verbesserte Farbqualität. Sie zeigen auch bei sehr hohen Temperaturen, z. B. 290° C, kaum Aufspaltung unter Druck in Lösungsmitteln wie N-Methylpyrrolidon und können deshalb z. B. als hochtemperaturbeständiges Beschichtungsmaterial eingesetzt werden.

## Vergleichsbeispiel 1

Dieses Beispiel beschreibt zum Vergleich die Herstellung von Polyphenylensulfid gemäß US-PS 3 354 129.

In einem mit Rührer ausgerüsteten Autoklav wurden 129 g Natriumsulfid-tri-hydrat (entsprechend 1 Mol $Na_2S$) und 300 g N-Methyl-2-pyrrolidon zusammengegeben. Das Gemisch wurde mit Stickstoff gespült und langsam bis auf 202° C erwärmt. Dabei destillierten insgesamt 19 ml Wasser ab. Der Ansatz wurde anschließend auf ca. 160° C heruntergekühlt und 147 g p-Dichlorbenzol (=1 Mol) in ca. 50 g N-Methyl-2-pyrrolidon hinzugefügt. Man erwärmt das Reaktionsgemisch unter dem Stickstoffvordruck von 2,5 bar in 30 Minuten auf 245° C, wobei der Druck auf 10 bar ansteigt, und hält diese Temperatur 3 Stunden. Nach Abkühlen auf Raumtemperatur wird ein grauer Feststoff isoliert, der anschließend einer sorgfältigen Wasserwäsche zur Entfernung der anorganischen Beimengen unterworfen wird. Man trocknet bei 80° C im Vakuum und erhält 100,3 g (93%) Poly-p-Phenylensulfid mit hellbrauner Farbe.

## Vergleichsbeispiel 2

Dieses Beispiel beschreibt zum Vergleich die Herstellung von Polyphenylensulfid gemäß JP-PS 55-54330 (Asahi Dow K.K. 21. 4. 1980), Beispiel 1.

In einem 500 ml-Reaktionsgefäß mit $N_2$-Einlaß und Gasphasenauslaß wurden 36,04 g Natriumsulfid-nona-hydrat, 100 ml N,N'-Dimethylethylenharnstoff und 50 ml N-Methylpyrrolidon eingewogen. Das Gemisch wurde mit Stickstoff gespült und langsam auf 200—225° C erwärmt. Dabei wurden 25,9 g Destillat, das hauptsächlich aus Wasser bestand, erhalten. Nach dem Abkühlen des Reaktionsgefäßes wurden 22,05 g p-Dichlorbenzol zugegeben. Unter $N_2$-Spülung wurde bei Normaldruck auf 220—225° C aufgeheizt. Nach 4 h wurde das Reaktionsgemisch in ungefähr 500 ml Methanol entleert und das Produkt durch Filtration abgetrennt. Das rohe Produkt wurde 4 h in etwa 1 l dest. Wasser bei 70° C gewaschen. Nach der Filtration wurde es 2 h in 200 ml Methanol bei etwa 50° C gewaschen, filtriert und bei 100° C im Vakuum getrocknet. Das p-Polyphenylensulfid wog 11,79 g (72,5%). Es hatte eine hellgraue Färbung.

## Vergleichsbeispiel 3

Dieses Beispiel beschreibt zum Vergleich die Herstellung von Poly-p-phenylensulfid gemäß JP-PS 55-54330 (Asahi Dow K.K. vom 21. 04. 1980), Beispiel 2.

Ein Ansatz aus 36,06 g Natriumsulfid-nona-hydrat, 150 ml N,N'-Dimethylethylenharnstoff und 22,15 g p-Dichlorbenzol wurde wie in Vergleichsbeispiel 2 zur Reaktion gebracht und aufgearbeitet. 9,39 g (57,9% Ausb.) hellgraues Poly-p-phenylensulfid wurden erhalten.

## Beispiel 1

In 450 ml N,N'-Dimethylethylenharnstoff wurde ein Gemisch aus 143,5 g Natriumsulfid-tri-hydrat und 5,7 g NaOH bis auf 185° C erwärmt. Dabei kondensieren 64 ml Destillat, das im wesentlichen aus Wasser besteht. Nach Zugabe von 160,2 g p-Dichlorbenzol und 4,0 g 1,2,4-Trichlorbenzol wurde der Ansatz 6 h im Autoklav auf 270° C erhitzt. Nach dem Abkühlen wurde der Ansatz in etwa 1 l dest. Wasser eingetragen und 2 h auf 100° C erwärmt. Anschließend wurde das Produkt durch Filtration erhalten. Das p-Polyphenylensulfid wurde noch mit etwa 500 ml Ethanol und Methylenchlorid gewaschen und abschließend bei 120° C im Vakuum getrocknet. Das weiße Produkt wog 111,4 g (94,7% Ausb.). Nach dem erfindungsgemäßen Verfahren wird also eine höhere Ausbeute bei gleichzeitiger besserer Farbe erreicht, als dies nach dem Verfahren gemäß JP-PS 55-54330 oder US-PS 3 354 129 der Fall ist. Wie die nachfolgenden Beispiele zeigen, ist auch die chemische und thermische Belastbarkeit wesentlich erhöht.

## Vergleichsbeispiel 4

Wie vorstehendes Beispiel 1, jedoch mit 300 ml N,N'-Dimethylethylenharnstoff und 150 ml N-Methylpyrrolidon als Lösungsmittel. Es werden 97,2 g (82,6% Ausb.) hellgraues Produkt erhalten.

## Vergleichsbeispiel 5

48 g p-Polyphenylensulfid, das nach Vergleichsbeispiel 1 hergestellt wurde, wurde in 400 ml N-Methylpyrrolidon 2 h auf 290°C erhitzt. Die Aufarbeitung ergab 9,3 g restliches Polymer, 84,5% waren zu löslichen Anteilen gespalten worden.

Vergleichsbeispiel 6

Wie Vergleichsbeispiel 5, jedoch in 400 ml N,N'-Dimethylethylenharnstoff. Das Polymere wurde vollkommen abgebaut, es wurden nur lösliche Spaltprodukte erhalten.

Vergleichsbeispiel 7

48 g p-Polyphenylensulfid, das nach Vergleichsbeispiel 2 hergestellt wurde, wurde in 400 ml N,N'-Dimethylethylenharnstoff 2 h auf 290°C erhitzt. Die Aufarbeitung ergab 24,3 g restliches Polymer, 49,4% wurden in lösliche Bestandteile aufgespalten.

Vergleichsbeispiel 8

48 g p-Polyphenylensulfid, das nach Vergleichsbeispiel 3 hergestellt wurde, wurden in 400 ml N,N'-Dimethylethylenharnstoff 2 h auf 290°C erhitzt. Die Aufarbeitung ergab 25,1 g restliches Polymer, 47,7% wurden in lösliche Bestandteile aufgespalten.

Vergleichsbeispiel 9

48 g p-Polyphenylensulfid, das nach Vergleichsbeispiel 4 hergestellt wurde, wurden in 400 ml N,N'-Dimethylethylenharnstoff 2 h auf 290°C erhitzt. Die Aufarbeitung ergab 27,3 g restliches Polymer. 43,1% waren zu löslichen Bestandteilen aufgespalten.

Vergleichsbeispiel 10

Wie Vergleichsbeispiel 9, jedoch in 400 ml N-Methylpyrrolidon. Es wurden 28,7 g Polymer zurückgewonnen, 40,2% waren zu löslichen Produkten aufgespalten worden.

Beispiel 2

48 g Polyarylensulfid, das nach Beispiel 1 hergestellt wurde, wurden in 400 ml N,N'-Dimethylethylenharnstoff 2 h auf 290°C erhitzt. 44,7 g Polymeres wurden zurückgewonnen. 93,2% Polyarylensulfid blieben unverändert erhalten.

Beispiel 3

Wie Beispiel 2, jedoch 400 ml N-Methylpyrrolidon als Lösungsmittel. 46,2 g Polymeres wurden zurückgewonnen, 96,2% Polyarylensulfid blieben unverändert erhalten.

**Patentansprüche**

1. Verfahren zur Herstellung von hochmolekularen verzweigten Polyarylensulfiden aus

a) Dihalogenbenzolen, von denen 50 bis 100 Mol-% der Formel (I)

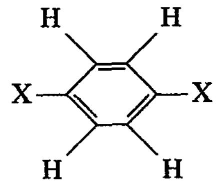

(I)

entsprechen, und 0 bis 50 Mol-% der Formel (II)

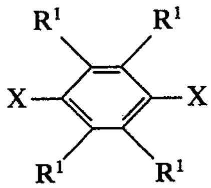

(II)

wobei

X Fluor, Chlor, Brom oder Jod und
$R^1$ gleich oder verschieden ist und Wasserstoff, $C_1-C_{20}$-Alkyl, $C_5-C_{20}$-Cycloalkyl, $C_6-C_{24}$-Aryl, $C_7-C_{24}$-Alkaryl oder $C_7-C_{24}$-Aralkyl sein kann, und/oder zwei Reste $R^1$ zu einem aromatischen oder heterocyclischen Ring verknüpft sein können, und immer mindestens ein Rest $R^1$ verschieden von Wasserstoff ist, und

b) 0,2 bis 2,4 Mol-%, bezogen auf die Dihalogenbenzole, eines Tri- oder Tetrahalogenaromaten der Formel (III)

$ArX_n$ (III)

wobei

Ar ein aromatischer oder heterocyclischer Rest mit 6—24 C-Atomen ist,
X die gleiche Bedeutung wie in Formel (I) und (II) hat und
n 3 oder 4 ist, und

c) Alkalisulfiden, wobei das molare Verhältnis von (a+b) : c im Bereich von 0,85 : 1 bis 1,15 : 1 liegt, in

d) am Stickstoff vollständig alkylierten cyclischen Harnstoffen, wobei das molare Verhältnis von c) zu d) im Bereich von 1 : 2 bis 1 : 15 liegt, gegebenenfalls unter Mitverwendung von Katalysatoren unter üblichen Reaktionszeiten umsetzt,

dadurch gekennzeichnet, daß man eine Reaktionstemperatur von 250° C bis 290° C einhält und Drücke von 4 bar bis 50 bar anwendet.

2. Verfahren nach Anspruch 1, dadurch gekennzeichnet, daß man N,N'-Dimethylethylenharnstoff und/oder N,N'-Dimethylpropylenharnstoff einsetzt.

3. Verfahren gemäß Ansprüche 1 und 2, dadurch gekennzeichnet, daß man Reaktionstemperaturen von 265° C bis 285° C anwendet.

4. Verfahren gemäß Ansprüche 1 bis 3, dadurch gekennzeichnet, daß man Drücke von 4 bar bis 20 bar anwendet.

## Claims

1. Process for the production of high molecular weight branched polyarylene sulphides from

a) dihalogen benzenes, 50 to 100 mol % of which correspond to the formular I

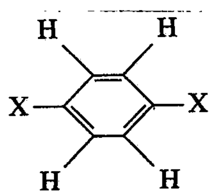

(I)

and 0 to 50 mol % to the formula II

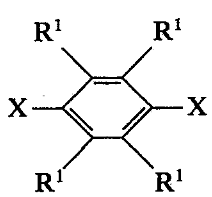

(II)

wherein

X is fluorine, chlorine, bromine or iodine and
$R^1$ is identical or different and can be hydrogen, $C_1$—$C_{20}$-alkyl, $C_5$—$C_{20}$-cycloalkyl, $C_6$—$C_{24}$-aryl, $C_7$—$C_{24}$-alkaryl or $C_7$—$C_{24}$-aralkyl, and/or two radicals $R^1$ can be linked to form an aromatic or heterocyclic ring, and at least one radical $R^1$ is always different from hydrogen and

b) 0.2 to 2.4 mol %, based on the dihalogen benzenes, of a tri- or tetrahalogen aromatic compound of the formula III

$$ArX_n \qquad (III)$$

wherein

Ar is an aromatic or heterocyclic ring with 6—24 C atoms,
X has the same meaning as in formula I and II and
n is 3 or 4, and

c) alkali metal sulphides, the molar ratio of (a + b) : c being in the range of from 0.85 : 1 to 1.15 : 1, in
d) cyclic ureas which are completely alkylated on the nitrogen atom, the molar ratio of c) to d) being in the range of from 1 : 2 to 1 : 15, optionally with the simultaneous use of catalysts, during customary reaction times,

characterised in that a reaction temperature of 250° C to 290° C is observed and pressures of 4 bars to 50 bars are used.

2. Process according to Claim 1, characterised in that N,N′-dimethylethylene urea and/or N,N′-dimethylpropylene urea are used.

3. Process according to Claims 1 and 2, characterised in that reaction temperatures of 265° C to 285° C are used.

4. Process according to Claims 1 to 3, characterised in that pressures of 4 bars to 20 bars are used.

## Revendications

1. Procédé de production de sulfures de polyarylènes ramifiés de haut poids moléculaire à partir

a) de dihalogénobenzènes dont 50 à 100 moles % répondent à la formule I

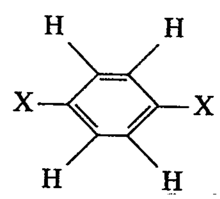

(I)

et 0 à 50 moles % correspondent à la formule II

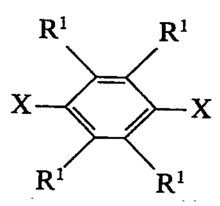

(II)

formules dans lesquelles

X représente le fluor, le chlore, le brome ou l'iode et
$R^1$ représente deux restes égaux ou différents et peut être l'hydrogène, un reste alkyle en $C_1$ à $C_{20}$, un reste cycloalkyle en $C_5$ à $C_{20}$, un reste aryle en $C_6$ à $C_{24}$, un reste alkaryle en $C_7$ à $C_{24}$ ou un reste aralkyle en $C_7$ à $C_{24}$ et/ou deux restes $R^1$ peuvent se lier en formant un noyau aromatique ou hétérocyclique et il y a toujours au moins un reste $R^1$ différent de l'hydrogène, et

b) de 0,2 à 2,4 moles %, par rapport aux dihalogénobenzènes, d'un hydrocarbure aromatique trihalogéné ou tétrahalogéné de formule III

$$ArX_n \qquad (III)$$

dans laquelle

Ar est un noyau aromatique ou hétérocyclique ayant 6 à 24 atomes de carbone,
X a la même définition que dans la formule I et dans la formule II, et
n a la valeur 3 ou 4, et

c) de sulfures alcalins, le rapport molaire (a+b) : c se situant dans l'intervalle de 0,85 : 1 à 1,15 : 1, dans
d) des urées cycliques totalement alkylées sur l'azote, le rapport molaire de c) à d) étant situé dans l'intervalle de 1 : 2 à 1 : 15, en utilisant éventuellement des catalyseurs pendant des durées classiques de réaction,

caractérisé en ce qu'on maintient une température de réaction de 250 à 290° C et on utilise des pressions de 4 à 50 bars.

2. Procédé suivant la revendication 1, caractérisé en ce qu'on utilise la N,N'-diméthyléthylèneurée et/ou la N,N'-diméthylpropylèneurée.

3. Procédé suivant les revendications 1 et 2, caractérisé en ce qu'on utilise des températures de réaction de 265 à 285° C.

4. Procédé suivant les revendications 1 à 3, caractérisé en ce qu'on utilise des pressions de 4 à 20 bars.